# EUROPEAN PATENT SPECIFICATION

(11) **EP 0 478 668 B1**
(45) Date of publication and mention of the grant of the patent: **16.03.1994**
(21) Application number: 90910054.7
(22) Date of filing: 12.02.1990
(51) Int. Cl.: F16K 37/00, G01D 5/39, G21C 17/00

(54) **PNEUMATIC OPERATED VALVE DATA ACQUISITIONER**
DATENERFASSUNG VON EINEM PNEUMATISCH BETÄTIGTEN VENTIL
DISPOSITIF POUR L'ACQUISITION DE DONNEES RELATIVES AUX SOUPAPES PNEUMATIQUES

(30) Priority: 20.06.1989 US 368604
(43) Date of publication of application: 08.04.1992
(73) Proprietor: COMBUSTION ENGINEERING, INC., Windsor, Connecticut 06095 (US)
(72) Inventor: MUTCHLER, John, H., Enfield, CT 06082 (US); JAEGER, Timothy, P., North Granby, CT 06060 (US); MATT, Richard, J., Avon, CT 06001 (US); FARVER, Theodore, B., Windsor Locks, CT 06096 (US)
(74) Representative: Rupprecht, Klaus, Dipl.-Ing.
(86) International application number: US9000757
(87) International publication number: WO9015948

(56) References cited:
- EP-A- 275 229
- CH-A- 414 180
- DE-A- 2 916 159
- FR-A- 2 455 701
- GB-A- 2 194 648
- US-A- 4 274 438
- US-A- 4 523 286

## Description

### Background of the Invention

The present invention relates to the testing of valves, and more particularly, to the acquisition of characteristic data for pneumatic operated valves in the field.

During the past few years, the nuclear power industry has begun to realize the consequence of valve misapplication, improper actuator setup, undersized actuators, and inadequate maintenance. As a result, many operators of nuclear power plants are interested in acquiring database systems by which the base line characteristics of individual valves are stored, and compared with measurements of valve characteristics taken on a periodic basis, whereby deviations from the base line characteristics imply the need for particular maintenance or corrective actions on a valve-by-valve basis. By identifying those valves that need attention well before mis-operation can have an impact on plant safety or performance, the plant operator can safely avoid the overly conservative approach of disassembling and rebuilding every valve on a periodic basis regardless of actual condition.

Known techniques are not well adapted for the accurate determination of the operating characteristic of valve stem displacement as a function of applied air pressure in pneumatic operated valves. More particularly; a pneumatic valve, which operates in a relatively straight-forward, uncomplicated manner, should be amenable to an inexpensive, easily implemented technique for acquiring stem displacement data.

An article entitled "Automated Troubleshooting of Pneumatically Operated Control Valves" was authored by W. V. Fitzgerald and published by the Electric Power Research Institute, Palo Alto, California as part of a notebook for an August 25-26, 1987 symposium it held in Kansas City, Missouri. It showed a valve diagnostic unit which used a "LVDT" (linearly variable differential transformer) for position sensing.

U.S. Patent No. 4,523,286 discloses a similar valve diagnostic unit with a position sensor connected through a lever device which has its mechanical motion changed by a signal converter into a voltage or electric current signal of a level corresponding to the stroke of the valve. A simpler valve stem position data producer is desired.

It is thus an object of the present invention to provide a data acquisition system by which the linear displacement of an operator component can easily and accurately be related to the change in actuating variable.

It is a particular object of the invention to provide a system for measuring the stem displacement in a pneumatic operated valve, as a function of air pressure applied to the valve operator.

It is a further object that such system be portable and readily deployed for use by technicians in the field, without the need to disconnect the valve from the process line or to attach sensors or gauges to the stem.

The system in accordance with the invention includes a target member associated with the stem and displaceable therewith, and a camera adapted to be positioned adjacent the stem for generating a video signal of at least a portion of the target member. Marker means associated with the valve in the field of view of the camera are provided for defining a reference displacement scale in the video signal. A converter is responsive to the video signal for generating target data commensurate with the absolute displacement of the target. First data interface means are provided for digitizing the sensed pneumatic pressure as the pressure is changed to displace the stem, preferably a full stroke from the open-to-close-to-open positions or vice versa. Second data interface means are provided for digitizing the target data commensurate with the displacement of the target. The digitized data are stored, preferably with a computer and associated random access memory, and can later be uploaded for use in, for example, the plant database system.

In a preferred embodiment, the displacement of the target member is determined by electronically counting the scan lines or sequence of pixels associated with the video signal, which are covered or uncovered, or otherwise interrupted, as the target member is displaced.

The camera, air pressure transducer and first and second interface means, computer, converter, a keyboard, and a battery power pack are all mounted within a suitcase-size portable box or container. Alternatively, the camera or other components may be connected to the computer and converter within the container, but removable during inspection for convenient positioning near the valve.

The valve data acquisition system in accordance with the invention is capable of obtaining signature traces, including the hysteresis loop for the stroking operation of an open yoked pneumatic operated valve. Off-nominal conditions of the valve which can affect the acquired data include a bent shaft or other sources of excessive friction, deteriorating seals in the valve or operator, or a change in the zero position, due, for example, to a worn seat.

### Brief Description of the Drawings

These and other objects and advantages of the invention will be described below with reference to the accompanying drawings, in which:
Figure 1 is a schematic view of a valve database system with which the data acquisition system of the present invention would be employed;
Figure 2 is a schematic representation of the system in accordance with the present invention in use for acquiring data on a pneumatic operated valve;
Figure 3 is an enlarged schematic view of one screen display as viewed by the technician gathering data, wherein the target member connected to the stem and a referenced marker for calibration are visible;
Figures 4(a) and (b) are schematic illustrations of the preferred technique for electronically determining the absolute displacement of the target as connected to the stem, resulting from a change in air pressure applied to the operator; and
Figure 5 is an enlarged schematic view of an alternative screen display for calibration.

### Description of the Preferred Embodiment

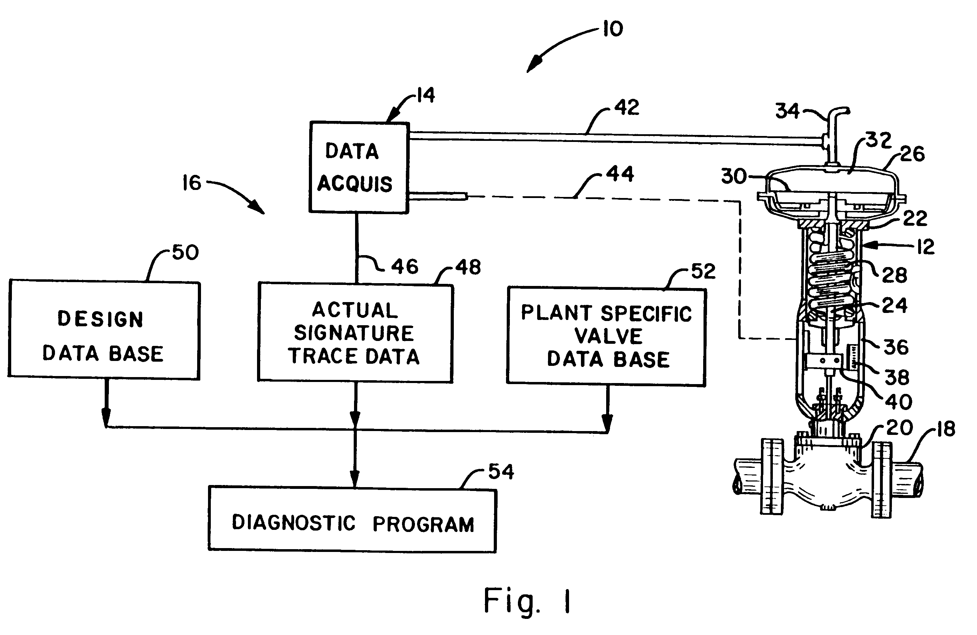

Figure 1 shows the context in which the present invention finds its most advantageous use. The underlying utility is that valve stem thrust can be determined by evaluating actuator pressure versus stem position. A plant valve diagnostic system 10 includes a multiplicity of individual valves, one of which is shown at 12, and individual valve data acquisition system 14, and a data analysis system 16.

A pneumatically operated valve 12 is shown connected to a process line 18 in, for example, a nuclear power plant. The valve 12 includes a body 20 containing a closeable passage through which line fluid may flow, and an operator 22 including a stem 24 for positioning closing means in the passage and an actuator 26 for displacing the stem a stroke distance corresponding to the open and closed position of the closing means. Typically, whether the valve is designed for an unpressurized open or unpressurized closed condition, the unpressurized or zero condition is maintained at a non-zero pressure to avoid initial lag or zero position drift. Smaller valves typically operate within the range of 0.021 to 0.103 MPa (3-15 psi), and larger valves in the range of 0.041 to 0.207 MPa (6-30 psi), with total stroke displacements of the stem ranging from a few inches (1 inch = 25,4 mm) up to two feet (1 foot = 304,8 mm). A spring 28 is typically provided to counterbalance the "zero" pressure of, for example, 0.021 MPa (3 psi) in the chamber 32, which is applied against diaphragm 30 connected to stem 24. A pressure fitting in line 34 is provided for chamber 32, and is connected to a conventional source of pressurized air (not shown).

The valve operator 22 typically has an open yoke 36 at its lower end, through which the stem 24 is visible and accessible. An identification plate 38 may also carry coarse gradations which, in conjunction with a pointer 40 attached to stem 24, permit visual observation of the open and closed stroke limits of the valve or a stem intermediate position. Typically, the gradations on plate 38 are no finer than approximately 1.6 mm (1/16 of an inch) and even the most careful observer would not likely be able to consistently read the scale to an accuracy with 0.8 mm (1/32 of an inch).

It has been determined, however, that a diagnostic system of the type shown at 16 would require data indicative of the relationship between stem displacement and operator pressure, that has a resolution of 0.4 mm (1/64 inch) or better. Low-cost displacement measuring techniques of sufficient accuracy suitable for use on-line in the field, are not know to the inventors. Moreover, any displacement measuring technique should ideally minimize the cost of hardware, by avoiding the requirement for customizing each displacement detector for each valve, or for permanently mounting expensive hardware on each valve.

In Figure 1, a sensor line 42 is shown having a connection at one end to fitting 34 for sensing the operator pressure and a sensor line 44 is shown generally leading to the valve yoke 36 for sensing the steam displacement. Lines 42 and 44 and the associated signal processing and data storage hardware within system 14, constitute the subject matter of the present invention. The technician can use one portable acquisition system 14 to collect data one valve at a time, with the collected data being automatically stored for later downloading through line 46 to the actual signature trace data processing block 48 of the analysis system 16. The signature or characteristic trace data of a particular valve is combined with design data contained in block 50 and information about the plant specific valves as contained in block 52, by the diagnostic program to help the plant operator identify valves that need immediate attention, plan a maintenance and replacement strategy, or otherwise monitor the condition of the inventory of on-line valves in the plant. The usefulness of the diagnostic system 10 strongly depends on the accuracy and resolution of the data recorded in the acquisition system 14.

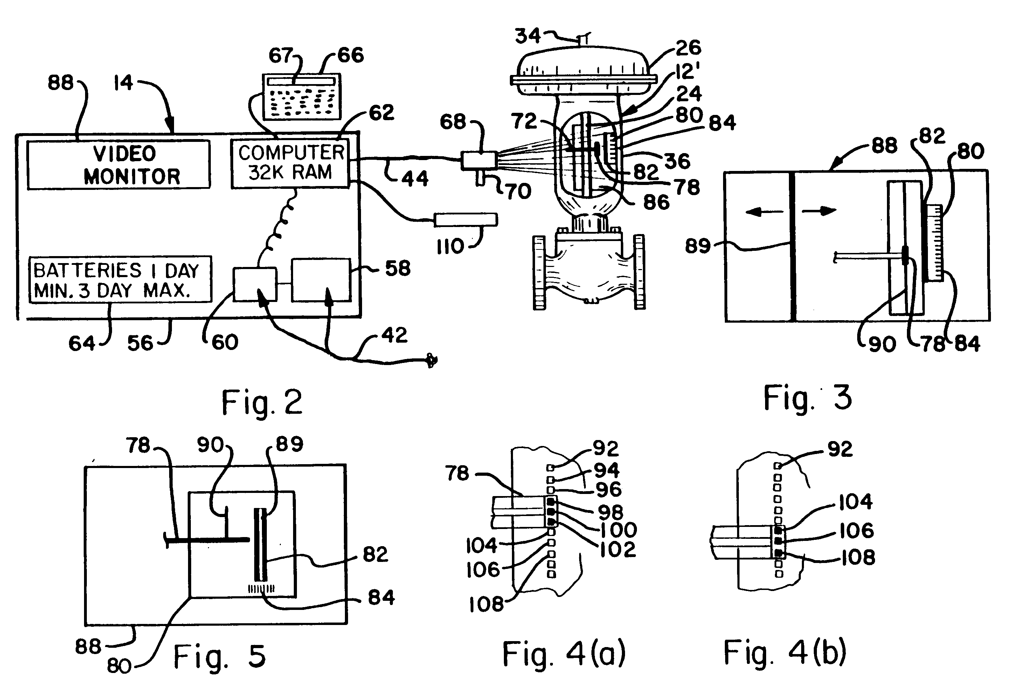

Figure 2 shows the data acquisition system 14 in accordance with the preferred embodiment of the invention. A suitcase-size insulated container 56 preferably carries an air pressure transducer 58 and associated transmitter 60 which are connected through line 42 and fitting 34 to the operator 26 of the valve 12'. The valve in Figure 2 is indicated as 12' because it has certain modifications, to be described below, relative to the more conventional valve 12 as shown in Figure 1. The pressure transmitter 60 is connected to a computer or processor 62 which includes a digital storage memory, for example, 32K RAM. A battery pack 64 is also carried within the container 56 with sufficient power to operate the computer, transducers and other equipment to be described below, continuously for a period of one to three days.

A human interface such as a keyboard 66 including CPU display 67 is connected to computer 62 and may either be permanently mounted within the container 56, or optionally be carried in the container only when not in use, and connectable through a plug or the like to the computer for use. The keyboard preferably has an alphanumeric set of keys by which the technician can record specific information concerning the appearance or operation of the valve, into the storage memory. Preprogrammed function keys such as "F1" can facilitate such recording.

In accordance with the invention, a camera 68 is connected to the computer through line 44 and includes support means 70 for positioning the camera in fixed relation to the valve 12', whereby the field of view of the camera includes a region within the valve yoke 36. In this region, the stem carries a disk 72 or other structure on which a target 78 is mounted for displacement commensurate with the linear displacement of stem 24. A marker 80 is affixed to the yoke 36 and includes one edge 82 which is preferably darkened and is known to have a precise length, for example, 50.8 mm (two inches). The marker 80 may also include valve identification data, preferably in the form of bar code as shown at 84. The camera 68 is positioned adjacent the yoke 36, such that the camera lens is approximately spaced a predetermined distance from the stem 24. A white card or the like 86 can be temporarily attached to the valve, or the marker 80 can include a white surface, such that the white surface spans the vertical path to be traversed by the target 78 as the stem 24 passes through a full stroke.

Preferably, the technician can observe a video image displayed in video monitor 88 within container 56, an enlarged schematic view of which is shown in Figure 3 or 5. The stem 24 and other structures which might be visible in actual use have been omitted for clarity in Figure 3.

In the preferred embodiment, the displacement of target 78 is determined electronically as follows. The camera 68 generates a composite video signal which through the television interface, or converter, associated with computer 62, is recognized as a series of points in a plurality of vertically spaced horizontal lines, or as a coordinate location in a video matrix. In any event, the converted video signal can be considered as made up of a multiplicity of pixels, each of which is either black or white. The system 14 calibrates itself so that in the converted video signal, the number of vertically aligned pixels that represents the exact span of black line 82, is determined. The known reference calibration pixel count can be compared to the displacement pixel count to provide a calibrated relative displacement measurement.

Part of the calibration step can include the electronic generation of a monitor line 89 which is precisely vertical relative to the screen display 88. In practice, valve operators 26 and stems 24 are not always precisely vertically oriented in the field and the monitor line can be controlled to move to the left and to the right in the display screen 88 such that the camera can be tilted and the monitor calibration line 89 moved, until the monitor calibration line 89 lies exactly over the reference line 82 on marker 80. A particular vertical series of pixels or equivalent discrete points 90 are electronically designated as the displacement measuring path. This path can be highlighted as at 90 so the technician can assure that the target 78 initially covers at least one of the pixels or points along path 90. Alternative monitor displays for calibration are shown in Figures 3 and 5.

As shown in Figures 4a and 4b, when the stem is displaced, the target 78 moves from an arbitrary initial position at which pixels 98, 100 and 102 from among pixels 92-106 are covered, to another position in which the pixels 104, 106 and 108 are covered. The sequential covering, or uncovering, of pixels in the path 90 is counted in the computer 62 and, based on the reference calibration, the relative or absolute movement of the target (i.e., stem) can be recorded with a resolution equivalent to that of a pixel, which is typically 0.4 mm (1/64 inch) or smaller. The additional details of the manner in which the linear displacement is counted electronically in accordance with the preferred embodiment may be obtained from the copending patent application entitled "Automated Flow Rotameter" filed by Theodore B. Farver on even date herewith, the disclosure of which is International Publication No. WO 90/15970 hereby incorporated by reference.

It should be appreciated, however, that other video image techniques can be used for computing and/or recording the stem displacement. In the preferred technique, the converter selects only a portion of the video signal represented by the path 90, without the need for further use of the marker line 82 once calibration has been completed. If the target 78 is of a precise length, it could equivalently serve as the marker calibration line 82.

As a reliable technique for assuring that the measured stem displacement will be associated with the correct valve, a bar code reader 110 coupled to the computer 62 can be used to scan the marker 80, thereby acquiring valve identification from the bar code 84. This also assures that the code must be scanned by the technician; the technician cannot use "old" data.

The identification data can be required as a prerequisite to the initiation of the pressure and displacement data, by means of control through the keyboard 66. The keyboard is coupled to the converter means, for setting the rate at which the pressure and displacement data are sensed and/or stored. Furthermore, the keyboard can provide for setting the duration of time during which data are generated and stored.

## Claims

1. A system (10) for acquiring characteristic data from a pneumatic valve (12') connected to a fluid line in the field, the valve having a body containing a closeable passage through which line fluid may flow, and an operator (26) including a stem (24) for positioning closing means in the passage and an actuator for displacing the stem a stroke distance corresponding to the open and closed position of the closing means, said system being of the type which includes means (42) for sensing the pneumatic pressure in the operator (26) as the stem is displaced over the stroke distance and which includes a means (58) responsive to the means (42) for sensing, for generating pressure data commensurate with the pneumatic pressure in the operator (26) as the stem (24) is displaced over the stroke distance; first data interface means (60,62) for digitizing the sensed pneumatic pressure data; and means (62) for storing digitized data; and, being characterized by:
marker means (80) associated with the valve and defining a known absolute distance;
a target member (78) associated with the stem and displaceable therewith;
camera means (68) adapted to be fixed in position adjacent the valve stem (24), for generating a video data signal of the marker means and the target member during the displacement of the stem over the stroke distance;
converter means (44,62) responsive to the video signal for generating target data commensurate with the displacement of the target resulting from a change in operator pressure; and
second data interface means (44,62) for digitizing the target data.

2. A method for acquiring characteristic data from a plurality of pneumatic valves that are each connected to a respective process flow line in a plant, each valve (12') having a pneumatic pressure chamber (26), a visible stem (24) that is displaced linearly in response to a change in the pressure in the chamber, and means responsive to the stem displacement for adjusting the flow through the line, comprising the steps of:
manually transporting a portable data acquisition unit (14) from an arbitrary first location in the plant to a second location near one of the pneumatic valves (12'), the unit including,
a camera (68) for continually generating a video signal,
a converter (44,62) coupled to the camera (68) for processing the video signal including storing digital representations of changes in the video signal,
means coupled (62) to the converter for storing the digital representations,
a pressure sensor (42),
means (60,62) associated with the pressure sensor (42) for generating a digital representation of changes in pressure sensed by the sensor,
a human interface (67) for manually setting control parameters for the unit;
mounting the camera (68) adjacent said one valve (12') so that the video signal generated by the camera includes the visible stem (24);
connecting the pressure sensor (42) to the pressure chamber;
calibrating the converter by selectively displacing the stem (24) so that a given change in the video signal due to the displacement of the stem is converted into a digital value of absolute displacement;
setting the interface (67) to initiate the generation and storage of digitized data values indicative of the pressure in the chamber (26),
initiating the generation and storage of digitized data values indicative of the displacement of the stem (24), and
terminating the storage of additional data values after a sufficient number of such values have been stored.

## Patentansprüche

1. System (10) zum Erfassen von Kenndaten von einem mit einer Flüssigkeitsleitung im Einsatzbereich verbundenen Druckluftventil (12') mit einem Körper, der einen schließbaren Durchgang enthält, durch den Leitungsflüssigkeit fließen kann, und ein Betätigungsglied (26) mit einer Spindel (24) zum Positionieren von Schließmitteln im Durchgang und ein Stellglied zum Verschieben der Spindel um einen der geöffneter und geschlossenen Lage des Schließmittels entsprechenden Hubweg, wobei das besagte System von der Art ist, die Mittel (42) zum Abfühlen des Druckluftdruckes im Betätigungsglied (26) bei Verschiebung der Spindel über den Hubweg einschließt, und die ein auf das Mittel (42) zum Abfühlen reagierendes Mittel (58) zum Erzeugen von mit dem Druckluftdruck im Betätigungsglied (26) bei Verschiebung der Spindel (24) über den Hubweg vergleichbaren Druckdaten einschließt; ersten Datenschnittstellenmitteln (60, 62) zum Digitalisieren der abgefühlten Druckluftdruckdaten; und Mitteln (62) zum Speichern von digitalisierten Daten;
gekennzeichnet durch:
mit dem Ventil verbundene und einen bekannten absoluten Weg definierende Markierungsmittel (80);
ein mit der Spindel verbundenes und damit verschiebbares Zielglied (78);
neben der Ventilspindel (24) fixierbare Kameramittel (68) zum Erzeugen eines Videodatensignals von den Markierungsmitteln und dem Zielglied während der Verschiebung der Spindel über den Hubweg;
auf das Videosignal reagierende Wandlermittel (44, 62) zum Erzeugen von mit der Verschiebung des Zieles, die sich aus einer Veränderung des Betätigungsglieddruckes ergibt, vergleichbaren Zieldaten; und
zweite Datenschnittstellenmittel (44, 62) zum Digitalisieren der Zieldaten.

2. Verfahren zur Erfassung von Kenndaten von einer Mehrzahl von Druckluftventilen, die jeweils mit einer entsprechenden Prozeßflußleitung in einer Anlage verbunden sind, wobei jedes Ventil (12') eine Druckluft-Druckkammer (26), eine sichtbare Spindel (24), die linear als Reaktion auf eine Veränderung des Druckes in der Kammer verschoben wird, und auf die Spindelverschiebung reagierende Mittel zum Verstellen des Flußes durch die Leitung besitzt, das folgende Schritte umfaßt:
Handbefördern einer tragbaren Datenerfassungseinheit (14) von einem beliebigen ersten Ort in der Anlage zu einem zweiten Ort in der Nähe eines der Druckluftventile (12'), wobei die Einheit folgendes enthält:
eine Kamera (68) zum fortlaufenden Erzeugen eines Videosignals,
einen mit der Kamera (68) verkoppelten Wandler (44, 62) zum Verarbeiten des Videosignals einschließlich der Speicherung von digitalen Darstellungen von Veränderungen im Videosignal,
mit dem Wandler verkoppelte Mittel (62) zum Speichern der digitalen Darstellungen,
einen Druckfühler (42),
mit dem Druckfühler (42) verbundene Mittel (60, 62) zum Erzeugen einer digitalen Darstellung von durch den Fühler abgefühlten Druckveränderungen,
eine Benutzerschnittfläche (67) zum Handeinstellen von Steuerparametern für die Einheit;
Anbringen der Kamera (68) neben dem besagten einen Ventil (12'), so daß das von der Kamera erzeugte Videosignal die sichbare Spindel (24) einschließt;
Verbinden des Druckfühlers (42) mit der Druckkammer;
Eichen des Wandlers durch gezieltes Verschieben der Spindel (24), so daß eine gegebene Veränderung des Videosignals aufgrund der Spindelverschiebung in einen digitalen Wert des absoluten Weges umgewandelt wird;
Einstellen der Schnittstelle (67) zum Einleiten der Erzeugung und Speicherung von den Druck in der Kammer (26) anzeigenden digitalisierten Datenwerten;
Einleiten der Erzeugung und Speicherung von den Weg der Spindel (24) anzeigenden digitalisierten Datenwerten, und
Abschließen der Speicherung zusätzlicher Datenwerte, nachdem eine ausreichende Anzahl dieser Werte gespeichert worden ist.

## Revendications

1. Système (10) pour acquérir des données caractéristiques d'une soupage pneumatique (12') raccordée à une conduite de fluide in situ, la soupape comportant un corps contenant un passage obturable à travers lequel le fluide de la conduite peut s'écouler et un dispositif de manoeuvre (26) comprenant une tige (24) pour positionner des moyens d'obturation dans le passage et un actionneur pour déplacer la tige sur une distance de course correspondant à la position d'ouverture et à la position de fermeture des moyens d'obturation, ledit système étant du type qui comprend un moyen (42) pour détecter la pression pneumatique dans le dispositif de manoeuvre (26) lorsque la tige est déplacée sur la distance de la course et qui comprend un moyen (58) sensible au moyen (42) pour détecter et générer des données de pression en rapport avec la pression pneumatique dans le dispositif de manoeuvre (26) lorsque la tige (24) est déplacée sur la distance de la course, un premier moyen à interface de données (60, 62) pour numériser les données de pression pneumatique détectées et un moyen (62) pour stocker les données numérisées; caractérisé par :
des moyens de marquage (80) associés à la soupape et définissant une distance absolue connue,
un élément cible (78) associé à la tige et déplaçable avec elle,
un moyen de prise de vues (68) susceptible d'être fixé en place à proximité de la tige (24) de la soupape pour générer un signal de données vidéo des moyens de marquage et de l'élément cible au cours du déplacement de la tige sur la distance de la course,
des moyens de conversion (44, 62) sensibles au signal vidéo pour générer des données de cible en rapport avec le déplacement de la cible résultant d'une modification de la pression du dispositif de manoeuvre,
un deuxième moyen à interface de données (44, 62) pour numériser les données de la cible.

2. Procédé pour acquérir des données caractéristiques d'une série de soupapes pneumatiques qui sont toutes raccordées à une conduite de traitement respective dans une centrale, chaque soupape (12') comportant une chambre de pression pneumatique (26), une tige visible (24) qui est déplacée linéairement en réponse à une modification de pression dans la chambre, et des moyens sensibles au déplacement de la tige pour régler le flux dans la conduite, ce procédé comprenant les opérations suivantes :
on transporte manuellement une unité d'acquisition de données portable (14) d'un premier endroit arbitraire dans la centrale vers un second endroit à proximité de l'une des soupapes pneumatiques (12'), cette unité comprenant :
un appareil de prise de vues (68) pour générer en continu un signal vidéo,
un convertisseur (44, 62) couplé à l'appareil de prise de vues (68) pour traiter le signal vidéo, notamment pour stocker des représentations numériques de modifications dans le signal vidéo,
un moyen (62) couplé au convertisseur pour stocker les représentations numériques,
un capteur de pression (42),
un moyen (60, 62) associé au capteur de pression (42) pour générer une représentation numérique de modifications de pression détectées par le capteur,
une interface humaine (67) pour régler manuellement des paramètres de contrôle de l'unité,
on monte l'appareil de prise de vues (68) à proximité de ladite soupape (12'), de telle sorte que le signal vidéo généré par l'appareil de prise de vues englobe la tige visible (24),
on connecte le capteur de pression (42) à la chambre de pression,
on étalonne le convertisseur en déplaçant sélectivement la tige (24), de telle sorte qu'une modification donnée du signal vidéo due au déplacement de la tige soit convertie en une valeur numérique de déplacement absolu,
on règle l'interface (67) pour amorcer la génération et le stockage de valeurs de données numérisées indicatives de la pression dans la chambre (26),
on amorce la génération et le stockage de valeurs de données numérisées indicatives du déplacement de la tige (24), et
on termine le stockage de valeurs de données additionnelles une fois qu'un nombre suffisant de ces valeurs a été stocké.
